# EUROPÄISCHE PATENTSCHRIFT

(11) **EP 2 078 876 B1**
(45) Veröffentlichungstag und Bekanntmachung des Hinweises auf die Patenterteilung: **04.08.2010**
(21) Anmeldenummer: 08173114.3
(22) Anmeldetag: 30.12.2008
(51) Int. Cl.: F16C 33/10, F16C 5/00, F01M 1/06

(54) **Kreuzkopflager**
Crosshead bearing
Palier à tête croisée

(30) Priorität: 09.01.2008 DE 102008003698
(43) Veröffentlichungstag der Anmeldung: 15.07.2009
(73) Patentinhaber: NEUMAN & ESSER Maschinenfabrik GmbH & Co. KG, 52531 Übach-Palenberg (DE)
(72) Erfinder: Hoff, Klaus Hubert, 52074 Aachen (DE)
(74) Vertreter: Fuchs

(56) Entgegenhaltungen:
- WO-A-2005/111445
- DE-A1- 2 414 469
- DE-B1- 2 136 935

## Beschreibung

Die Erfindung betrifft ein Kreuzkopflager, insbesondere für Hubkolbenmaschinen, umfassend eine Lagerfläche mit mehreren darin axial verlaufenden Schmiemuten, die jeweils über eine rückwärtige Bohrung an eine Schmierölversorgung angeschlossen sind.

Bei der konstruktiven Gestaltung des Kreuzkopflagers muss unter allen zu erwartenden Betriebsbedingungen eine Ölversorgung zwischen dem Kreuzkopflager und dem darin aufgenommenen Zapfen sichergestellt sein. Durch die Tatsache, dass bei einem Kreuzkopflager keine umlaufende Bewegung am Lager stattfindet, kann kein nennenswerter Frischöltransport durch eine Drehbewegung erzeugt werden. Durch die Radialbewegung verdrängtes Öl an der lastzugewandten Lagerseite muss während der nachfolgenden Bewegung des Zapfens auf der gegenüberliegenden Lagerseite mit Frischöl ersetzt werden, da durch die schnelle Bewegung des Zapfens ein seitliches Nachfüllen nur bedingt möglich ist, der Dampfdruck des Öls unterschritten wird und es in diesem Bereich zu einer Ölunterversorgung kommt. Durch konstruktive Maßnahmen ist dieser Lagerbereich bis zum nächsten Lasthub wieder zu füllen.

Üblicherweise werden insbesondere im Kompressorenbau in der Lagerfläche in Umfangsrichtung verteilt Schmiemuten eingebracht, die von der Rückseite des Lagers mit Drucköl versorgt werden. In der Annahme, dass im Wesentlichen durch eine Schwenkbewegung des Kreuzkopflagers ein Öltransport ausgehend von jeder der Schmiemuten in die tragenden Lagerfläche möglich ist, wird der Abstand der Schmiernuten regelmäßig in der Größenordnung des Schwenkwinkels gewählt, das heißt beispielsweise in einem Abstand von 15° zueinander. Dabei befindet sich keine Schmiernut in Kraftwirkrichtung des Lagers, da der annähernd parabolische Druckaufbau in den gegenüberliegenden zentralen Lastpositionen nicht durch eine Schmiemut unterbrochen werden soll. Ein derartiges Kreuzkopflager ist in der DE 35 19 984 A1 offenbart.

Die DE 27 11 983 A1 beschreibt Lagerschalen mit einer oder mehreren darin angeordneten Ölnuten, die in Umfangsrichtung innerhalb eines Winkelbereiches zwischen 60° und 150° vorgesehen sind. Die Summe der Längen der Bereiche, die an irgendeinem Querschnitt in Axialrichtung erscheinen, soll 5 bis 50 % der Lagerschalenbreite betragen, so dass eine überwiegend dichte Struktur von Ölnuten geschaffen werden soll. Die überwiegend schräg verlaufenden Ölnuten der bekannten Druckschrift sind willkürlich verteilt und stets außerhalb der Bereiche des größten zu erwartenden Druckes angeordnet.

Die AT 007 501 U1 offenbart ein Kreuzkopflager mit einer einzigen Schmiernut, die außerhalb der zentralen Lastpositionen angeordnet ist. Der Fachmann erhält überdies den Hinweis, dass es bei bekannten Kreuzkopflagern nachteilig ist, eine einzige Schmiemut in einer Zone höchster Belastung vorzusehen, da die Kraft, die das Pleuel auf den Kolbenbolzen ausübt, immer in Richtung Pleuelachse wirkt. Die Flächenpressung in diesem Bereich einer zentralen Lastposition wäre durch die Schmiemut erhöht.

Der wesentliche Nachteil der bekannten Kreuzkopflager liegt darin, dass im Wesentlichen die beiden im Bereich der zentralen Lastpositionen befindlichen Lagerflächen am hydrodynamischen Druckaufbau beteiligt sind. Sofern Schmiemuten vorhanden sind, befinden sich diese außerhalb dieser Bereiche. Die von den Lastpositionen weiter entfernt liegenden Lagerflächen bauen nur noch einen geringen Druck auf, da dort aufgrund des lokal größeren Schmierspaltes der Verdrängungsmechanismus deutlich schwächer zum Tragen kommt. Der Spitzenöldruck wird in den Bereichen der zentralen Lastpositionen verhältnismäßig groß.

Demzufolge lag der Erfindung die Aufgabe zugrunde, den Spitzenöldruck in den zentralen Lastpositionen des Kreuzkopflagers zu senken und dadurch eine generelle Belastungssteigerung zu erzielen.

Die Aufgabe wird erfindungsgemäß mit einem Kreuzkopflager gelöst, bei dem in den gegenüberliegenden zentralen Lastpositionen der Lagerfläche jeweils eine Schmiemut als Hauptentlastungsnut angeordnet ist.

Unter den zentralen Lastpositionen werden die Bereiche der Lagerfläche in Verlängerung der Pleuelachse verstanden. Diese Achse liegt in der höchsten Kraftwirkrichtung der im Betrieb zu erwartenden Kräfte. In eingebautem Zustand befinden sich die Hauptentlastungsnuten in der 6 beziehungsweise 12 Uhr-Position des Kreuzkopflagers.

Durch ein Aufprägen des externen Vordrucks wird ein hydrodynamischer Druckaufbau an den zentralen Lastpositionen verhindert. Der hydrodynamische Druck muss sich deshalb in den Lagerflächen links und rechts der jeweiligen Hauptentlastungsnut aufbauen. Durch diese Konstruktion wird erreicht, dass anstatt eines Abschnitts der Lagerfläche nunmehr zwei Abschnitte der Lagerfläche an der hydrodynamischen Kraftübertragung beteiligt sind. Demzufolge tritt erfindungsgemäß der maximale Öldruck an zwei Stellen beidseitig einer Hauptentlastungsnut auf, ist dafür aber sehr viel kleiner. Vorzugsweise ist in der Lagerfläche beidseitig der jeweiligen Hauptentlastungsnut eine einzige Hilfsentlastungsnut angeordnet. Der Druckaufbau findet dabei in den links und rechts der Hauptentlastungsnut liegenden Lagerflächen bis zur Hilfsentlastungsnut statt. An den jenseits der Hilfsentlastungsnuten liegenden Abschnitten der Lagerfläche findet kein nennenswerter Druckaufbau statt, so dass diese Lagerflächen nicht mehr an der Lastübertragung beteiligt sind. Aus diesem Grund kann in diesen Bereichen auf das Einbringen zusätzlicher Schmiemuten weitgehend verzichtet werden.

Es hat sich als günstig erwiesen, wenn die Hilfsentlastungsnuten in einem Winkel von 20° bis 40°, besonders bevorzugt 30°, zu der benachbarten Hauptentlastungsnut ausgerichtet sind. Dieser in Umfangsrichtung vergleichsweise große Abstand der Schmiernuten ist insbesondere durch die zentrale Versorgung mit Frischöl über die Hauptentlastungsnut möglich, ohne dass Ölversorgungsprobleme auftreten.

Zweckmäßigerweise ist in gegenüberliegenden Seiten in der Lagerfläche in einem Winkel von ungefähr 90° zu den Hauptentlastungsnuten jeweils eine Ölversorgungsnut angeordnet. Die Ölversorgungsnuten dienen ausschließlich der Ölversorgung und nicht der Entlastung der Lagerfläche in diesem Bereich.

Vorteilhafterweise sind die Ölverso.rgungsnuten gegenüberliegend angeordnet, so dass die Ölversorgungsnuten in Umfangsrichtung bezüglich der Hauptentlastungsnuten gleichmäßig verteilt sind und eine gleichmäßige Ölversorgung gewährleistet ist. Die Ötversorgungsnuten befinden sich folglich in der 3 beziehungsweise 9 Uhr-Position.

Gemäß einer besonders bevorzugten Ausführungsform verlaufen die Hauptentlastungsnuten und/oder die Hilfsentlastungsnuten und/oder die Ölversorgungsnuten in axialer Richtung geradlinig durch die Lagerfläche. Auch hieraus ergibt sich über die gesamte axiale Länge des Kreuzkopflagers ein konstanter Abstand zwischen den Nuten und dadurch eine besonders günstige Schmierölversorgung.

Die Hauptentlastungsnuten und/oder die Hilfsentlastungsnuten und/oder die Ölversorgungsnuten können in axialer Richtung beabstandet zu dem jeweiligen Ende der Lagerfläche ausgebildet sein. Dieses hat den Vorteil, dass kein Schmieröl nach vorne oder hinten aus den Schmiemuten abfließen kann.

Vorzugsweise sind die Hauptentlastungsnuten und/oder die Hilfsentlastungsnuten und/oder die Ölversorgungsnuten in axialer Richtung mittig angeordnet, so dass auch in axialer Richtung eine gleichmäßige Schmierölversorgung über die ebenfalls mittig in die Schmiernuten mündenden Bohrungen sichergestellt ist.

Zum besseren Verständnis ist die Erfindung nachfolgend anhand von drei Figuren näher erläutert. Es zeigen die
- **Figur 1:**: einen Querschnitt durch ein Kreuzkopflager gemäß des Standes der Technik;
- **Figur 2:**: einen Querschnitt durch ein erfindungsgemäßes Kreuzkopflager und
- **Figur 3:**: einen Längsschnitt durch ein erfindungsgemäßes Kreuzkopflager.

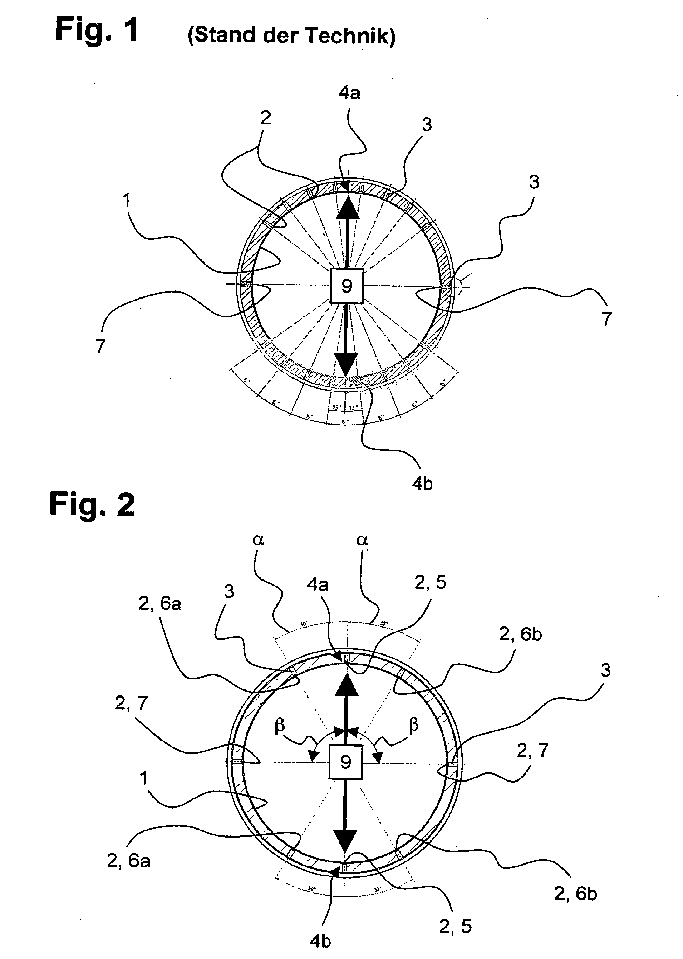

Die Figur 1 zeigt einen Querschnitt auf ein Kreuzkopflager gemäß des Standes der Technik mit einer im Querschnitt kreisrunden Lagerfläche 1. In der Lagerfläche 1 sind in der oberen und unteren Hälfte jeweils acht Schmiernuten 2 eingebracht, die in axialer Richtung durch die Lagerfläche 1 verlaufen. Jede der Schmiemuten 2 weist eine radial durch das Kreuzkopflager verlaufende Bohrung 3 auf, über welche Schmieröl der jeweiligen Schmiernut 2 zugeführt wird.

Die Schmiernuten 2 sind zueinander in Umfangsrichtung in einem Winkel von 15° beabstandet, wobei im Bereich der zentralen Lastpositionen 4a, 4b keine Schmiernut 2 vorhanden ist.

Die in Kraftwirkrichtung 9 liegenden Lastpositionen 4a, 4b befinden sich in einer 6 beziehungsweise 12 Uhr-Position und liegen damit genau mittig zwischen zwei benachbarten Schmiemuten 2. Die Anordnung der in Nähe der Lastpositionen 4a, 4b befindlichen Schmiernuten 2 wurde deshalb vorgenommen, weil die Fachwelt bisher davon ausgegangen ist, dass es besonders vorteilhaft sei, die im Bereich der Kraftwirkrichtung 9 liegenden Abschnitte der Lagerfläche 1 nicht zu schwächen.

Rechtwinklig zu der Kraftwirkrichtung 9 sind in der Lagerfläche 1 gegenüberliegend Ölversorgungsnuten 7 zu erkennen, die ebenfalls über Bohrungen 3 mit Schmieröl versorgt werden. Die Ölversorgungsnuten 7 befinden sich demzufolge in der 3 und 9 Uhr-Position.

Eine Belastungssteigerung des Kreuzkopflagers wird mit der erfindungsgemäßen Anordnung der Schmiernuten 2 entsprechend Figur 2 erzielt. Hierbei liegen zwei der in der Lagerfläche 1 axial verlaufenden Schmiemuten 2 in der Kraftwirkrichtung 9 und übernehmen auf den gegenüberliegenden Seiten des Kreuzkopflagers jeweils die Funktion einer Hauptentlastungsnut 5. Durch die Anordnung der Hauptentlastungsnuten 5 im Bereich der zentralen Lastpositionen 4a, 4b nimmt die Lagerfläche 1 in diesen Abschnitten keine Kräfte auf; diese verteilen sich vielmehr auf die in Umfangsrichtung links und rechts davon liegenden Abschnitte. Die Hauptentlastungsnuten 5 liegen in der 6 beziehungsweise 12 Uhr-Position des Kreuzkopflagers.

Neben jeder der beiden Hauptentlastungsnuten 5 ist unter einem Winkel α von +/- 30° jeweils eine Hilfsentlastungsnut 6a, 6b ausgebildet. Die Hilfsentlastungsnuten 6a, 6b begrenzen die Kräfte aufnehmende Lagerfläche 1 ausgehend von der Hauptentlastungsnut 5 in Umfangsrichtung. Hieraus resultieren lediglich zwischen der Hauptentlastungsnut 5 und den benachbarten Hilfsentlastungsnuten 6a, 6b dienende Abschnitte der Lagerfläche 1 zur Kraftaufnahme.

Unter einem Winkel β von ca. 90° sind an gegenüberliegenden Seiten des Kreuzkopflagers außerdem Ölversorgungsnuten 7 angeordnet, die jedoch nicht zur Entlastung der Lagerfläche 1 in diesem Abschnitt dienen, sondern lediglich der Schmierölversorgung.

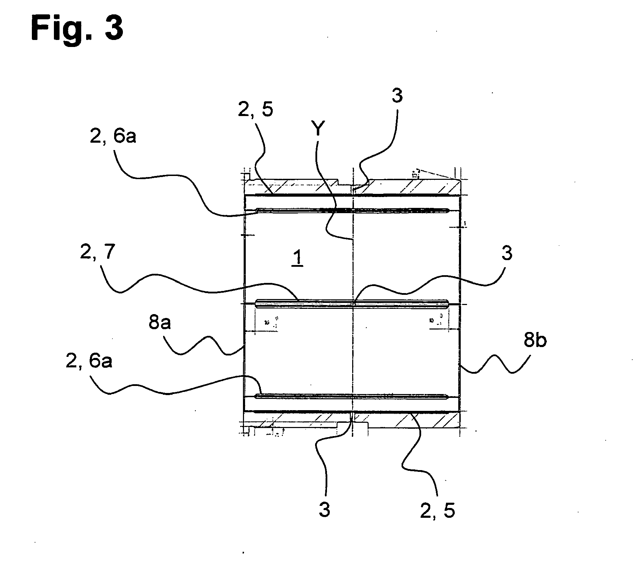

Einen Längsschnitt durch das erfindungsgemäße Kreuzkopflager zeigt die Figur 3. Die radial angeordneten Bohrungen 3 liegen in einer senkrechten Ebene, die rechtwinklig zu der axialen Erstreckung des Kreuzkopflagers verläuft und die Mittelachse Y schneidet.

Beidseitig der Mittelachse Y verlaufen die Schmiernuten 2 symmetrisch in Richtung der axialen Enden 8a, 8b der Lagerfläche 1. Dabei sind die Schmiemuten 2 jedoch beabstandet zu den axialen Enden 8a, 8b angeordnet, so dass zwischen jeder Schmiernut 2 und dem nächstliegenden axialen Ende 8a, 8b stets ein Abschnitt der Lagerfläche 1 verbleibt.

### Bezugszeichenliste

- 1: Lagerfläche
- 2: Schmiemut
- 3: Bohrung
- 4a, b: zentrale Lastpositionen
- 5: Hauptentlastungsnut
- 6a, b: Hilfsentlastungsnut
- 7: Ölversorgungsnut
- 8a, b: axiales Ende Lagerfläche
- 9: Kraftwirkrichtung

- Y: Mittelachse

- α: Winkel zwischen Haupt- und Hilfsentlastungsnut
- β: Winkel zwischen Hauptentlastungsnut und Ölversorgungsnut

## Patentansprüche

1. Kreuzkopflager, insbesondere für Hubkolbenmaschinen, umfassend eine Lagerfläche (1) mit mehreren darin axial verlaufenden Schmiemuten (2), die jeweils über eine rückwärtige Bohrung (3) an eine Schmierölversorgung angeschlossen sind, **dadurch gekennzeichnet,**
**dass** in den gegenüberliegenden zentralen Lastpositionen (4a, 4b) der Lagerfläche (1) jeweils eine Schmiernut (2) als Hauptentlastungsnut (5) angeordnet ist.

2. Kreuzkopflager nach Anspruch 1, **dadurch gekennzeichnet, dass** in der Lagerfläche (1) beidseitig der jeweiligen Hauptentlastungsnut (5) eine einzige Hilfsentlastungsnut (6a, 6b) angeordnet ist.

3. Kreuzkopflager nach Anspruch 2, **dadurch gekennzeichnet, dass** die Hilfsentlastungsnuten (6a, 6b) in einem Winkel (α) von 20° bis 40°, besonders bevorzugt 30°, zu der benachbarten Hauptentlastungsnut (5) ausgerichtet sind.

4. Kreuzkopflager nach einem der Ansprüche 1 bis 3, **dadurch gekennzeichnet, dass** in der Lagerfläche (1) in einem Winkel (β) von ungefähr 90° zu den Hauptentlastungsnuten (5) eine Ölversorgungsnut (7) angeordnet ist.

5. Kreuzkopflager nach Anspruch 4, **dadurch gekennzeichnet, dass** zwei Ölversorgungsnuten (7) gegenüberliegend angeordnet sind.

6. Kreuzkopflager nach einem der Ansprüche 1 bis 5, **dadurch gekennzeichnet, dass** die Hauptentlastungsnuten (5) und/oder die Hilfsentlastungsnuten (6a, 6b) und/oder die Ölversorgungsnuten (7) in axialer Richtung geradlinig durch die Lagerfläche (1) verlaufen.

7. Kreuzkopflager nach einem der Ansprüche 1 bis 6, **dadurch gekennzeichnet, dass** die Hauptentlastungsnuten (5) und/oder die Hilfsentlastungsnuten (6a, 6b) und/oder die Ölversorgungsnuten (7) in axialer Richtung beabstandet zu dem jeweiligen Ende (8a, 8b) der Lagerfläche (1) ausgebildet sind.

8. Kreuzkopflager nach einem der Ansprüche 1 bis 7, **dadurch gekennzeichnet, dass** die Hauptentlastungsnuten (5) und/oder die Hilfsentlastungsnuten (6a, 6b) und/oder die Ölversorgungsnuten (7) in axialer Richtung mittig angeordnet sind.

## Claims

1. A crosshead bearing, in particular for reciprocating piston engines, comprising a bearing face (1) having a plurality of lubricating grooves (2) running axially therein, each of which is connected via a rear bore (3) to a lubricating oil supply, **characterised in that** in each of the opposing central load positions (4a, 4b) of the bearing face (1) a lubricating groove (2) is arranged as the main relief groove (5).

2. A crosshead bearing according to claim 1, **characterised in that** in the bearing face (1) a single auxiliary relief groove (6a, 6b) is arranged on each side of the particular main relief groove (5).

3. A crosshead bearing according to claim 2, **characterised in that** the auxiliary relief grooves (6a, 6b) are oriented at an angle (α) of from 20° to 40°, especially preferably 30°, with respect to the adjacent main relief groove (5).

4. A crosshead bearing according to any one of claims 1 to 3, **characterised in that** an oil-supply groove (7) is arranged in the bearing face (1) at an angle (β) of approximately 90° with respect to the main relief grooves (5).

5. A crosshead bearing according to claim 4, **characterised in that** two oil-supply grooves (7) are arranged opposite one another.

6. A crosshead bearing according to any one of claims 1 to 5, **characterised in that** the main relief grooves (5) and/or the auxiliary relief grooves (6a, 6b) and/or the oil-supply grooves (7) run in the axial direction rectilinearly through the bearing face (1).

7. A crosshead bearing according to any one of claims 1 to 6, **characterised in that** the main relief grooves (5) and/or the auxiliary relief grooves (6a, 6b) and/or the oil-supply grooves (7) are constructed in the axial direction spaced with respect to the respective end (8a, 8b) of the bearing face (1).

8. A crosshead bearing according to any one of claims 1 to 7, **characterised in that** the main relief grooves (5) and/or the auxiliary relief grooves (6a, 6b) and/or the oil-supply grooves (7) are arranged centred in the axial direction.

## Revendications

1. Palier de crosse de bielle, en particulier pour machines à pistons alternatifs, comprenant une surface de palier (1) dans laquelle s'étendent axialement plusieurs rainures de lubrification (2) qui sont respectivement raccordées par l'intermédiaire d'un perçage arrière (3) à une alimentation en huile de lubrification,
**caractérisé en ce qu'**une rainure de lubrification (2) est respectivement disposée comme rainure de décharge principale (5) dans les positions de charge centrales opposées (4a, 4b) de la surface de palier (1).

2. Palier de crosse de bielle selon la revendication 1, **caractérisé en ce qu'**une unique rainure de décharge auxiliaire (6a, 6b) est disposée dans la surface de palier (1) de part et d'autre de la rainure de décharge principale respective (5).

3. Palier de crosse de bielle selon la revendication 2, **caractérisé en ce que** les rainures de décharge auxiliaires (6a, 6b) sont orientées sous un angle (α) de 20° à 40°, d'une manière particulièrement préférée de 30°, par rapport à la rainure de décharge principale voisine (5).

4. Palier de crosse de bielle selon l'une des revendications 1 à 3, **caractérisé en ce qu'**une rainure d'alimentation en huile (7) est disposée dans la surface de palier (1) sous un angle (β) d'environ 90° par rapport aux rainures de décharge principales (5).

5. Palier de crosse de bielle selon la revendication 4, **caractérisé en ce que** deux rainures d'alimentation en huile (7) sont disposées en vis-à-vis.

6. Palier de crosse de bielle selon l'une des revendications 1 à 5, **caractérisé en ce que** les rainures de décharge principales (5) et/ou les rainures de décharge auxiliaires (6a, 6b) et/ou les rainures d'alimentation en huile (7) s'étendent, en direction axiale, en ligne droite à travers la surface de palier (1).

7. Palier de crosse de bielle selon l'une des revendications 1 à 6, **caractérisé en ce que** les rainures de décharge principales (5) et/ou les rainures de décharge auxiliaires (6a, 6b) et/ou les rainures d'alimentation en huile (7) sont configurées, en direction axiale, à distance de l'extrémité respective (8a, 8b) de la surface de palier (1).

8. Palier de crosse de bielle selon l'une des revendications 1 à 7, **caractérisé en ce que** les rainures de décharge principales (5) et/ou les rainures de décharge auxiliaires (6a, 6b) et/ou les rainures d'alimentation en huile (7) sont disposées centralement en direction axiale.
